# EUROPEAN PATENT APPLICATION

(11) **EP 2 465 347 A1**
(43) Date of publication of application: **20.06.2012**
(21) Application number: 11192337.1
(22) Date of filing: 07.12.2011
(51) Int. Cl.: A01K 97/00, A01K 97/18

(54) **Fish hook remover**

(30) Priority: 16.12.2010 GB 201021371
(71) Applicant: Benedetti International Limited, Netherton, Wishaw ML2 0JG (GB)
(72) Inventor: Benedetti, Giovanni, West Kilbride, KA23 9LQ (GB)
(74) Representative: Coret, Sophie V.G.A.

(57) **Abstract**

The invention relates to a fish hook remover (1) to help the removal of a fish hook embedded in a human body part, said fish hook being provided with a barbed portion, a curved portion and a shank portion having an extremity, wherein said fish hook remover comprises:
- a base (3),
- an engaging member (5) to engage the curved portion of the hook;
- a resting surface provided within said base to receive and hold a part of the shank portion of the fish hook; and
- securing means (40,18) to hold said shank portion in position with
respect to said base.

The invention further relates to a kit comprising said fish hook remover and to a method of removing a fish hook embedded in a human body.

## Description

### Field of the invention

The present invention relates to a device to remove a fish hook which has become inadvertently embedded in a human body part and to a kit containing the same.

### Background of the invention

Conventional fish hooks comprise a point (the sharp end that penetrates the mouth of the fish). The point is connected to a shank by a bent portion (the bend). The shank's end is connected to the fishing line by means of an eye or hole which is provided at the end of the shank. A great range of fish hooks are available depending upon the configuration of the point, barb, eye, shank, bend or size but most of them includes barbs extending backward from the tip of the point of hook that keeps the fish from un-hooking. Fish hook removers are well known in the art but are generally designed for the removal of fish hooks from a hooked fish and not suitable when the hook has become embedded in human flesh due to accidental mishandling of the line and/or hook.

Recreational fishing using fish hooks is a sport which is enjoyed by a large number of people. Also, some commercial fishing methods require the use fish hooks. Although rarely serious, accidents involving fishermen or other persons present on site are rather common. Usually the hook becomes attached to the hand, arm or even head of the person.

The removal of a barbed fish hook is not a straightforward operation. Simply pulling away the hook forces the barbs to dig deeper into the flesh and leads to aggravation of the injury. The method recommended and commonly known by experienced fishermen involves placing a loop of string around the curved portion of the hook, pressing down the shank of the hook and pulling the loop of material with a quick motion.

PCT Publication No W02005/096812 discloses a fish hook removal aid which comprises a loop of string to engage the curved portion of the hook. The loop of string is attached to a handle to ease the pulling away of the hook. This device however still requires that an external downward force be applied onto the eye and/or shank of the hook while the handle is maneuvered.

The normal use of such a device requires the use of two hands. However, this is impractical when the injured person is alone and the hook is embedded in his/her hand or arm. In this situation a device such as the one described in W02005/096812 requires the assistance of another person. Moreover, inexperienced fishermen may not be aware of the correct method of using such a device and have the equanimity to fully comprehend the required movements to be performed before trying to pull the hook out.

There is therefore a need for a fish hook remover which can assist the removal of fish hooks embedded in a human body part simply, efficiently and/or in a single-handed manner. In addition the fish hook remover of the invention is preferably inexpensive and reliable.

### Summary of the Invention

It is therefore an object of the invention to provide a fish hook remover to help or assist the removal of a fish hook embedded with a human body part, said fish hook being provided with a barbed portion, a curved portion and a shank portion having an extremity, wherein said fish hook remover comprises:
- a base;
- an engaging member to engage the curved portion of the hook;
- a resting surface provided within said base to receive and hold a part of the shank portion of the fish hook, and preferably its extremity; and
- securing means to hold said shank portion in position with respect to said base.

According to an embodiment of the invention the resting surface is provided within an aperture which is positioned within the base, preferably underneath the engaging member. As the end of fish hook shanks are frequently provided with a slight bend, a small hole is advantageously provided with the walls of the aperture to receive and hold the eye portion of the shank.

The means for securing the shank in position with respect to the base conveniently comprises a sliding member which can be actuated by a button provided on the exterior of the base of the fish hook remover. The member can be slid to contact and push the shank against the base in order to maintain it in position. Advantageously a small slot is provided to the sliding member in order to engage the shank (which is generally of circular or generally circular cross section) and ensure a better hold.

Advantageously the engaging member is slidably mounted onto the base and can move away from the base thereby adopting different positions and being adaptable to different size of fish hooks. It is particularly preferred that the engaging member comprises a longitudinal body which is provided with one extremity which protrudes away from the base. The body can slide within the base and a resting groove or hook is advantageously provided at its extremity. The body may be slightly curved so that it departs from the shank portion of the hook and leaves the shank portion free to engage the resting surface of the base.

With respect to the above embodiment, the engaging member can freely slide away from or back to the base in order to adapt to a particular length of the shank of the fish hook to be removed. Thus, when the desired position of the engaging member is found, the engaging member is to be locked in position. To that effect locking means are advantageously provided to this particularly preferred embodiment of the invention. These locking means can comprise the combination of a series of notches provided onto the elongated body of the engaging member which may cooperate with a locking tongue which can be movably mounted onto the base and which can be actuated by the user. It is particularly advantageous that the means to lock the engaging member in position and the means to secure the fish hook shank to the base be actuated by the user simultaneously. For example the locking means and the securing means can be provided onto one sliding member which is advantageously actuated by a single button.

It is another object of the invention to provide a kit which comprises the fish hook remover of the invention in a suitable packaging. Suitably, a set of instructions explaining how to use the fish hook remover can be provided. Also, at least one first aid item such as an antiseptic wipe, a bandage or a plaster can be included as part of the kit.

It is a further object of the invention to provide a method for removing a fish hook embedded in a human body part and comprising the steps of providing a device as described above, engaging the curved portion of the hook within the engaging member, positioning a part of the shank portion within said base, securing said portion in position with respect to said base; and moving said device downward with respect to the human body part and forward with respect to the direction defined by the shank and the curved part of the hook.

### Brief Description of the Drawings

The invention will now be described in more detail with reference to exemplifying embodiments thereof and with reference to the accompanying drawings in which:

Fig. 1 shows a side elevational view of a preferred embodiment of a fish hook remover made according to the invention;

Fig. 2 shows a side elevational view of the fish hook remover of Fig. 1, a fish hook being engaged by its groove portion 9.

Fig. 3 shows a side elevational view of the fish hook remover and fish hook of Fig. 2, the eye portion of the fish hook being engaged by the remover.

Fig. 4 is a cross-sectional view of Fig. 3 taken along the line AA'.

Fig. 5 is similar to the view of Fig. 4 except for the locking member which has been slid downwards.

Figs. 6 to 11 show successive steps of a fish hook removal process using the fish hook remover of Fig.1.

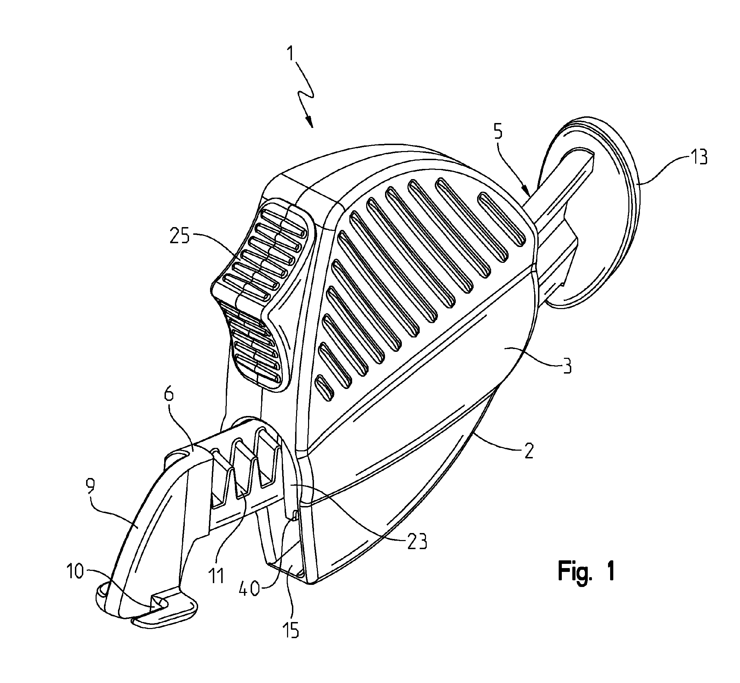

A fish hook removal device 1 according to a preferred embodiment of the invention is shown in Figs 1 to 10. This device comprises a base 3, an elongated engaging member 5 and a locking mechanism.

As can be best seen on Fig. 1, the engaging member 5 is preferably elongated and may project outwardly from the base 3. It conveniently comprises a curved hook portion 9 which is advantageously provided with a groove 10 at one of its two extremities. The engaging member 5 is slidably mounted within the base 3 and comprises a longitudinal body 6 onto which are provided a series of notches 11. Advantageously a stopper 13 is positioned at the other extremity of the engaging member 5 and prevents the engaging member 5 to slide out of the base 3.

The base 3 is further equipped with a groove or aperture 15 which is adapted to receive the extremity 24 of the shank 22 of a fish hook 16. Advantageously the groove is provided with a hole 18. The hole 18 is configured to receive the end of the shank 22. The end of the shank 22 is frequently referred to as the "eye" or "eye portion" of the fish hook. This is because it is where the hole or slot connecting the hook to the fishing line or lure is usually positioned.

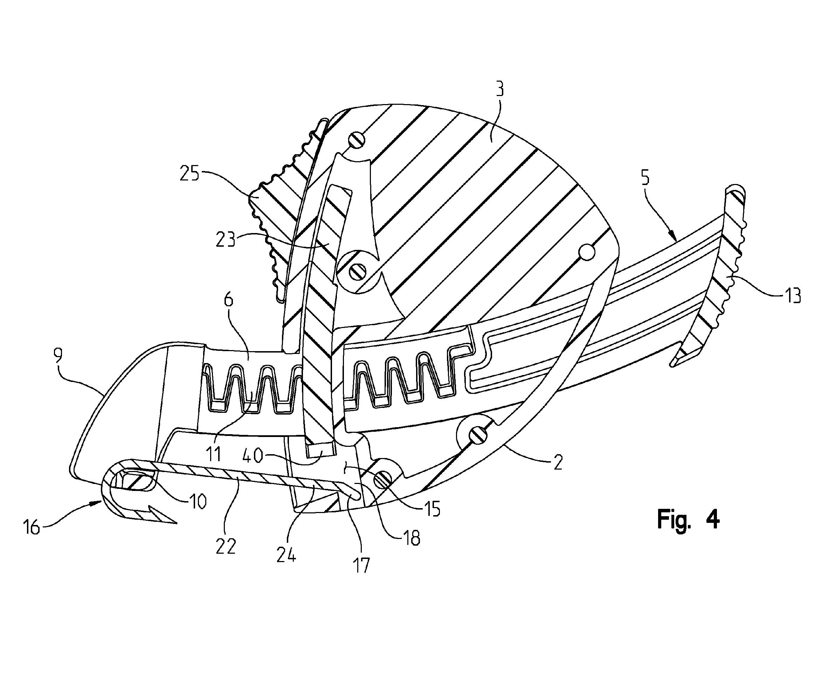

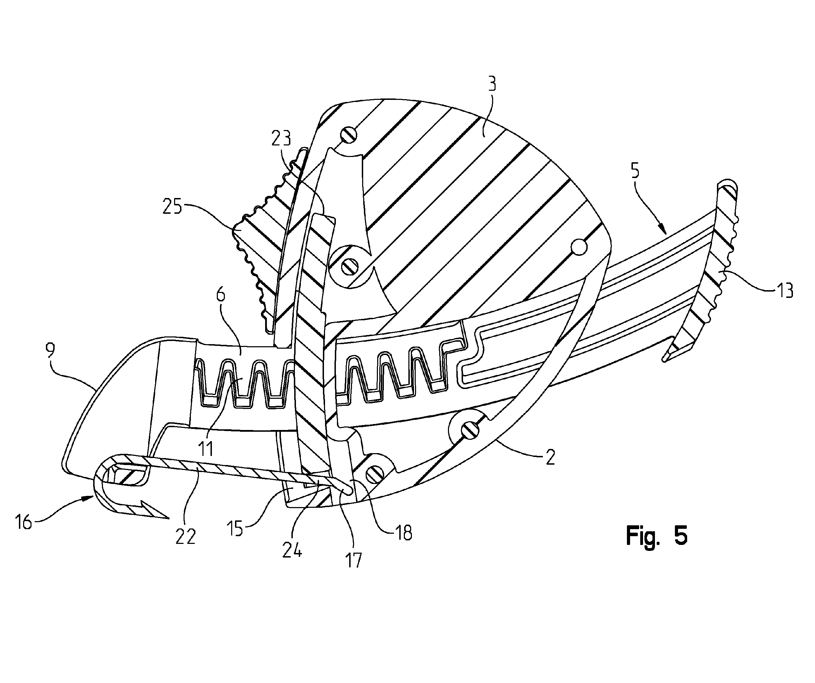

As can be seen from the figures, and particularly with reference to figures 4 and 5, the eye portion 17 is slightly bent and engaged by the hole 18. The hole 18 can have various shapes and sizes but is configured to engage the eye portion 17 of the shank 22 and prevent any upward motion of the eye portion 17 when the engaging member 5 is actuated this applying a downward force to the shank's extremity 24.

The locking mechanism comprises a sliding member 23 which is operated via a locking button 25. The sliding member 23 comprises a projection (not shown) which can slidably engage one of the notches 11. The sliding member further comprises a locking groove 40 which is sized and shaped to engage the shank 22 of the fish hook 16 and hold it in position with respect to the base 3.

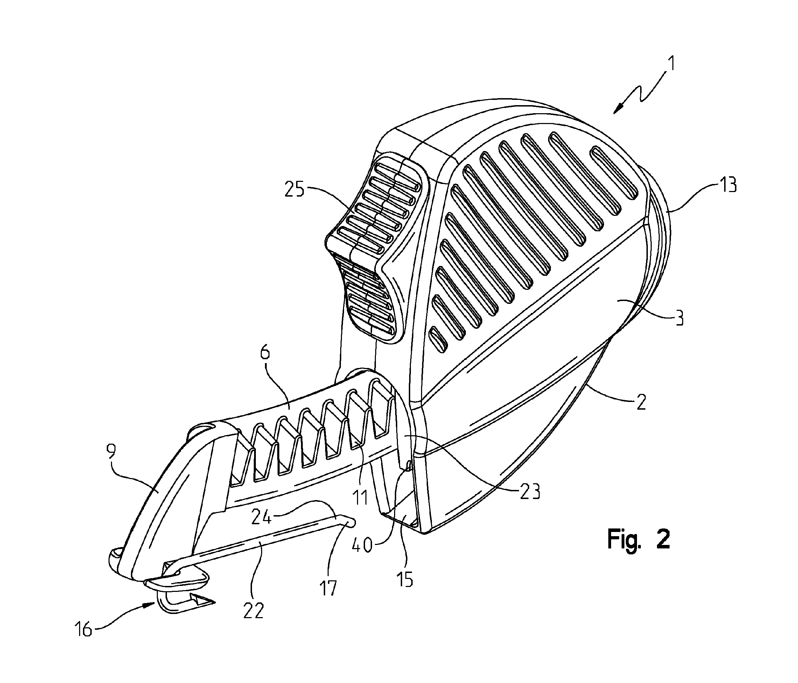

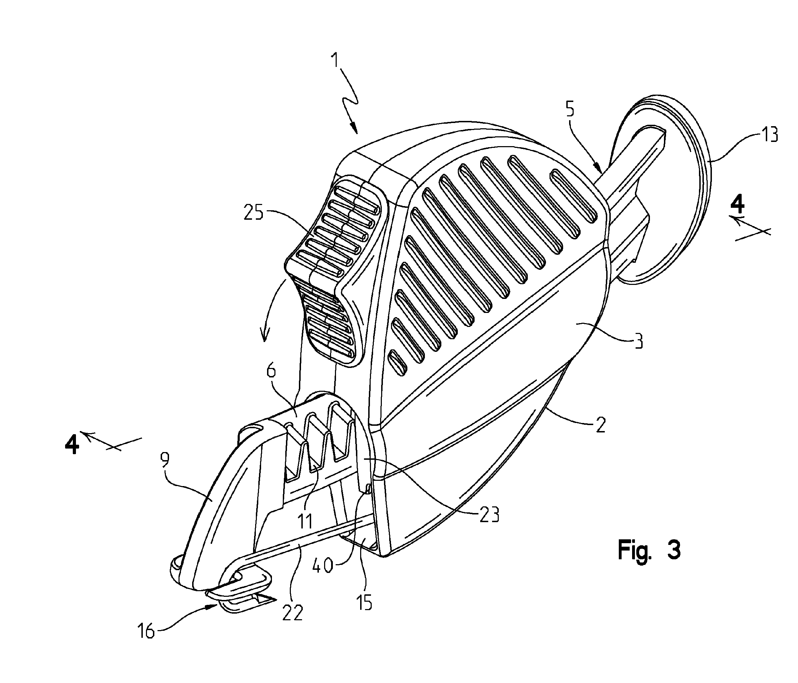

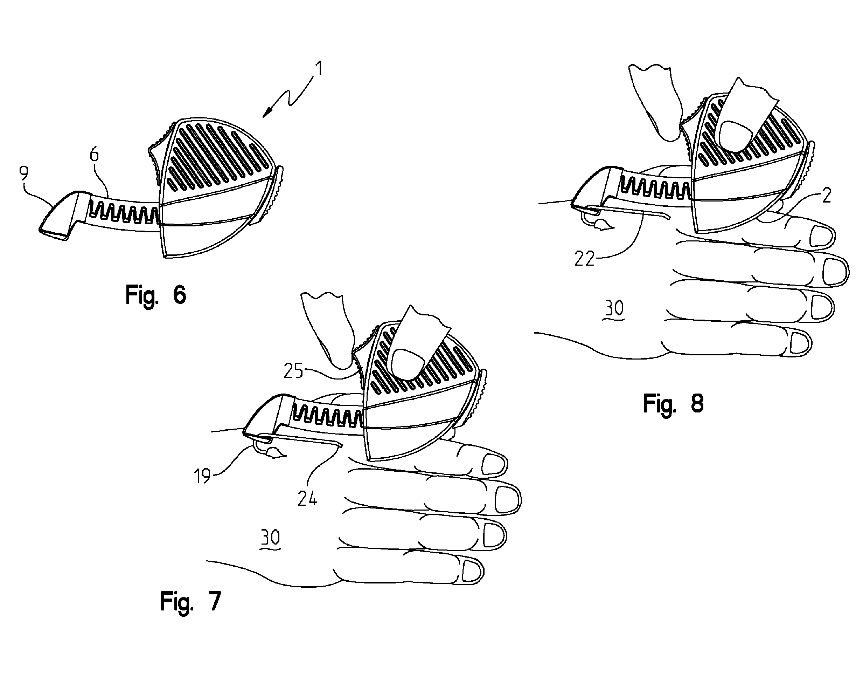

In operation, as shown in Figs. 6 to 11 the device is used unlocked and the engaging member 5 can freely slide within base 3. As shown in Fig. 2 the hook portion 9 is used to engage the curved portion 19 of the fish hook 16. The extremity 24 of the fish hook shank 22 is then engaged by the user within the receiving groove 15 and the hole 18 as shown in Figs. 3 and 4.

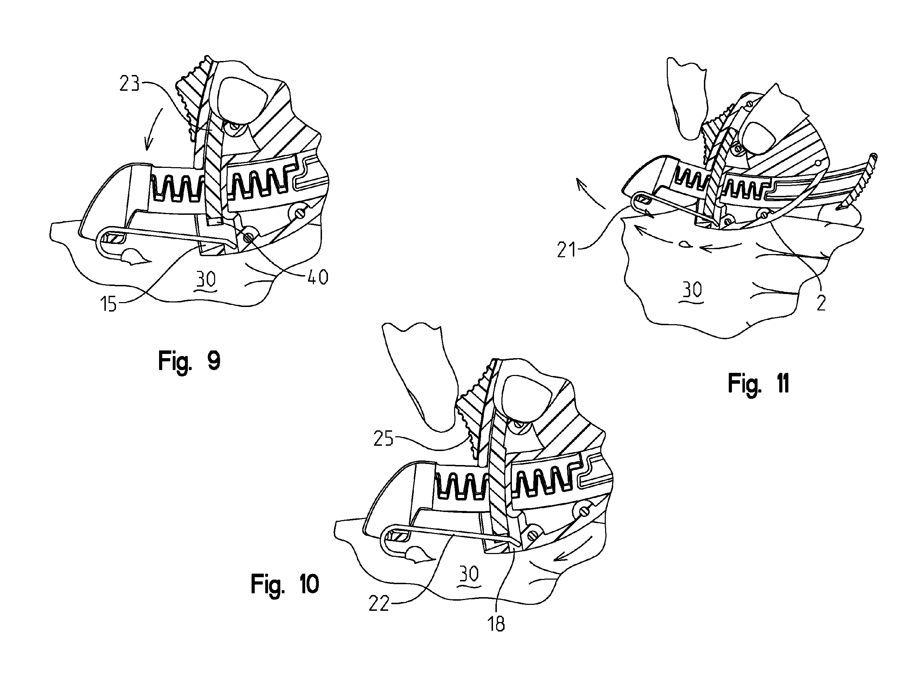

As shown in Figs.5 and 10, once the fish hook shank 22 is positioned within groove 15 and hole 18, both the fish hook shank 22 and the engaging member 5 are locked into position by the user actuating the locking button 25 by pushing downward. The sliding member 23 is thus moved until the projection (not shown) engages one of the notches 11 and the locking groove 40 engages the fish hook shank 22.

The last step of the removal process is for the user to hold firmly the device 1 and, while preferably still holding the locking button in its locking position, provide the base with a firm downward and forward movement (i.e. substantially parallel to the shank of the fish hook and away from its extremity), thus releasing the fish hook 16 from the wound. To help this movement, the portion 2 of the base 3 which can enter in contact with the human body part 30, can be curved.

The device of the invention can be easily manufactured using known methods. In particular each of the elements of the device can be made of plastic material such as polypropylene which can be molded into shape using well known injection molding methods.

The fish hook remover 1 is advantageously provided as part of a kit which may comprise in addition to the remover itself, a set of instructions, an antiseptic wipe and/or a plaster and bandages all conveniently packaged in a suitable casing.

Many modifications and variations of the present invention are possible in light of the above teachings. In particular, the present invention is not limited to the removal of the particular type of fish hook exemplified (i.e. a "spade end" fish hook which has a flattened area to allow attachment of the leader to the hook and no eye at all) but can be used with respect to a wide variety of fish hooks such as ring or ball eye, brazed eye (the eye is fully closed), tapered eye (to reduce a weight), looped eye (traditional on Atlantic salmon flies) or needles eye. More generally the invention can be used with respect to any kind of bait-cast hooks, fly-cast hooks and bait and spin cast line hooks which have barbs. It is therefore understood within the scope of the attached claims that the invention may be protected otherwise than specifically described in the above embodiments.

## Claims

1. A fish hook remover to help the removal of a fish hook embedded in a human body part, said fish hook being provided with a barbed portion, a curved portion and a shank portion having an extremity, wherein said fish hook remover comprises:
- a base,
- an engaging member to engage the curved portion of the hook;
- a resting surface provided within said base to receive and hold a part of the shank portion of the fish hook; and
- securing means to hold said shank portion in position with respect to said base.

2. The fish hook remover according to claim 1, wherein said resting surface is provided within an aperture which is positioned within the base.

3. The fish hook remover according to claim 2, wherein said aperture is provided underneath the engaging member.

4. The fish hook remover according to any one of claims 1 to 3,
wherein said means for securing the shank comprises a sliding member.

5. The fish hook remover according to claim 4, wherein a small slot is provided to the sliding member to engage said shank.

6. The fish hook remover according to any one of claims 1 to 5,
wherein said engaging member is slidably mounted onto the base.

7. The fish hook remover according to any one of claims 1 to 6,
wherein said engaging member comprises a longitudinal body which is provided with one extremity which protrude away from said base.

8. The fish hook remover according to claim 7, wherein said extremity is provided with a resting groove.

9. The fish hook remover according to any one of claims 1 to 8,
wherein said fish hook remover further comprises locking means to lock said engaging member.

10. The fish hook remover according to claim 9, wherein said locking means comprises a locking tongue which is movably mounted within said base and which cooperates with a series of notches provided onto the elongated body of said engaging member.

11. The fish hook remover according to claim 10, wherein said locking means and said securing means can be actuated by a single button provided at the exterior of said base.

12. The fish hook remover according to any one of claims 1 to 11
wherein said fish hook comprises an eye portion and wherein securing means further comprises a hole which is sized and shaped to receive the eye portion of said fish hook.

13. A kit which comprises the fish hook remover as claimed in any one of claims 1 to 12 and a suitable packaging.

14. The kit of claim 13, wherein it further comprises at least one item chosen in the group constituted from a set of instructions, an antiseptic wipe, a bandage and a plaster.

15. A method for removing a fish hook embedded in a human body part, said method comprising the steps of:
a) providing a device as described in claims 1 to 12,
b) engaging the curved portion of the hook within the engaging member,
c) positioning a part of the shank portion within said base,
d) securing said portion in position with respect to said base;
and
e) moving said device downward with respect to the human body part and forward with respect to the direction defined by the shank and the curved portion of the hook.
